# FASCICULE DE BREVET EUROPEEN

(11) **EP 3 679 217 B1**
(45) Date de publication et mention de la délivrance du brevet: **05.10.2022**
(21) Numéro de dépôt: 18762096.8
(22) Date de dépôt: 04.09.2018
(51) Int. Cl.: E06B 9/42, E06B 9/46, E06B 9/50, E06B 9/64, E06B 9/66, E06B 9/72, G03B 21/58

(54) **DISPOSITIF MOTORISÉ DE MANOEUVRE DESTINÉ A LA MANOEUVRE D'UN ÉCRAN MOBILE À TOILE ENROULABLE D'UN DISPOSITIF DE COUVERTURE DE FENÊTRE OU D' ÉCRAN DE PROJECTION**
MOTORISIERTE BETÄTIGUNGSVORRICHTUNG ZUR BETÄTIGUNG EINER BEWEGLICHEN ABSCHIRMUNG MIT WICKELLEINWAND FÜR EINE FENSTERABDECKUNGS- ODER PROJEKTIONSSCHIRMVORRICHTUNG
MOTORIZED OPERATING DEVICE FOR OPERATING A MOVABLE SCREEN, HAVING A WINDING CANVAS, OF A WINDOW COVERING OR PROJECTION SCREEN DEVICE

(30) Priorité: 04.09.2017 FR 1758142; 04.09.2017 FR 1758141; 04.09.2017 FR 1758140
(43) Date de publication de la demande: 15.07.2020
(73) Titulaire: Somfy Activites SA, 74300 Cluses (FR)
(72) Inventeur: LEMAITRE, Sébastien, 74440 Mieussy (FR); DUCRETET-PAJOT, Guillaume, 69100 Villeurbanne (FR)
(74) Mandataire: Novaimo
(86) Numéro de dépôt international: PCT/EP2018/073679
(87) Numéro de publication internationale: WO 2019/043239

(56) Documents cités:
- WO-A1-2013/186319
- US-A- 1 450 520
- US-A1- 2012 279 668

## Description

L'invention concerne un dispositif motorisé de manœuvre pour écran mobile à toile enroulable d'un dispositif de couverture de fenêtre ou d'écran, notamment d'écran de projection, le dispositif motorisé de manœuvre étant destiné à être suspendu par la toile.

L'invention concerne un procédé de fabrication d'un tel dispositif de couverture de fenêtre ou d'écran. L'invention concerne enfin un dispositif de couverture de fenêtre ou d'écran, notamment d'écran de projection, obtenu par la mise en œuvre d'un tel procédé de fabrication.

On connaît des dispositifs de store à toile enroulable dans lesquels un tube d'enroulement motorisé est positionné en bas de la toile et sert de charge permettant de tendre la toile. Lors des manœuvres de déroulement et de repli de la toile du store, le tube d'enroulement motorisé se déplace verticalement, suspendu par la toile.

Le dispositif motorisé décrit par le document WO 2013/186319 A1 et correspondant au préambule de la revendication 1 en est un exemple.

Ce type de store est particulièrement intéressant dans la mesure où il peut être installé aisément dans un bâtiment existant par un utilisateur final. Toutefois, cet avantage nécessite des solutions permettant également à l'utilisateur final de configurer ou personnaliser le store de manière aisé. En particulier, il existe un besoin de solutions permettant de fixer aisément une toile au tube d'enroulement. De même, il existe un besoin de solutions permettant d'adapter aisément la largeur du store à une largeur d'ouverture existant dans le bâtiment et/ou à une largeur de toile à disposition de l'utilisateur.

Le but de l'invention est de fournir un dispositif motorisé de manœuvre pour écran mobile à toile enroulable d'un dispositif de couverture de fenêtre ou d'écran remédiant aux inconvénients mentionnés et améliorant les dispositifs motorisés de manœuvre connus de l'art antérieur. En particulier, l'invention propose un dispositif motorisé simple dont la longueur peut être configurée aisément.

Le dispositif motorisé de manœuvre selon l'invention est défini par la revendication 1. Différents modes de réalisation du dispositif sont définis par les revendications dépendantes 2 à 6.

Le procédé selon l'invention de fabrication d'un dispositif de couverture de fenêtre ou d'écran comprenant une étape de fourniture d'un tel dispositif motorisé est défini par la revendication 7. Différents modes d'exécution du procédé sont définis par les revendications dépendantes 8 à 14.

Le dispositif de couverture de fenêtre ou d'écran obtenu par la mise en œuvre du procédé selon l'une des revendications 9 à 14, est défini à la revendication 15.

Sauf incompatibilité logique ou technique, les différents aspects de l'invention peuvent être combinés entre eux.

L'invention sera mieux comprise à la lecture de la description qui va suivre, donnée uniquement à titre d'exemple et faite en se référant aux dessins annexés sur lesquels :
La figure 1 est une vue en perspective d'un premier mode de réalisation d'un dispositif de couverture de fenêtre ou d'écran.
La figure 2 est une vue en perspective du premier mode de réalisation d'un dispositif motorisée de manœuvre.
La figure 3 est une vue en perspective éclatée du premier mode de réalisation du dispositif motorisée de manœuvre.
La figure 4 est une vue d'une section transversale d'un tube d'enroulement du premier mode de réalisation du dispositif motorisée de manœuvre.
Les figures 5 et 6 sont des vues en perspective d'un manchon de liaison mécanique de parties du tube d'enroulement du premier mode de réalisation du dispositif motorisé de manœuvre.
Les figures 7 à 9 sont des vues de sections transversales en différents lieux d'une barre de compensation du premier mode de réalisation du dispositif motorisée de manœuvre.
La figure 10 est une vue en perspective partielle éclatée de la barre de compensation du premier mode de réalisation du dispositif motorisée de manœuvre.
La figure 11 est une vue en perspective partielle du tube d'enroulement du premier mode de réalisation du dispositif motorisée de manœuvre.
Les figures 12 et 13 sont des vues en perspective de clips de maintien en position d'une extrémité de toile.
La figure 14A et 14B sont des vues en perspective d'un élément de liaison mécanique de la barre de compensation au tube d'enroulement du premier mode de réalisation du dispositif motorisée de manœuvre.
La figure 15 est une vue en coupe illustrant un premier type d'accrochage de la toile au tube d'enroulement.
La figure 16 est une vue en coupe illustrant un deuxième type d'accrochage de la toile au tube d'enroulement.
La figure 17 est une vue en coupe illustrant un troisième type d'accrochage de la toile au tube d'enroulement.
La figure 18 est une vue en perspective coupée et partielle d'un deuxième mode de réalisation d'un dispositif motorisée de manœuvre.
La figure 19 est une vue en perspective d'un élément de liaison mécanique de la barre de compensation au tube d'enroulement du deuxième mode de réalisation du dispositif motorisée de manœuvre.
La figure 20 est une vue en perspective d'un capuchon amovible d'obturation d'une rainure de passage de la toile.
La figure 21 est une vue en perspective partielle d'un exemple de réalisation d'une barre de compensation.

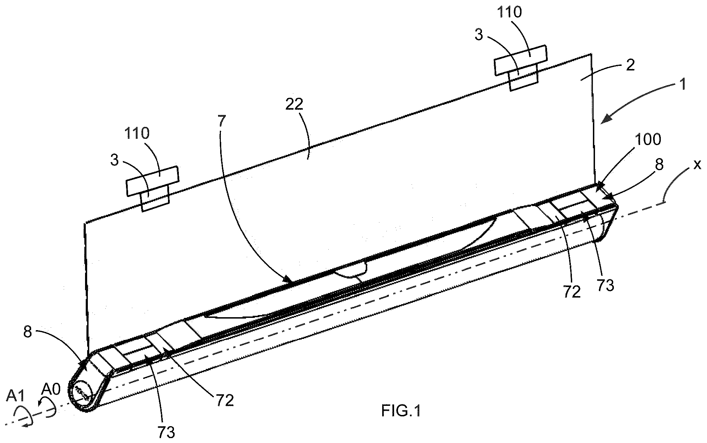

Un mode de réalisation d'un dispositif 1 de couverture de fenêtre ou d'écran, notamment d'écran de projection est décrit ci-après en référence à la figure 1. Le dispositif 1 de couverture de fenêtre ou d'écran de projection comprend un écran mobile à toile enroulable 2 et un dispositif motorisé 100 de manœuvre destiné à la manœuvre de la toile enroulable 2.

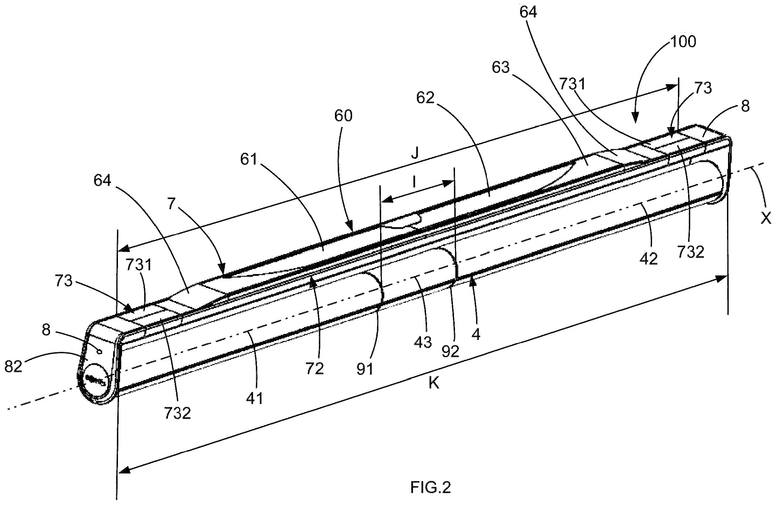

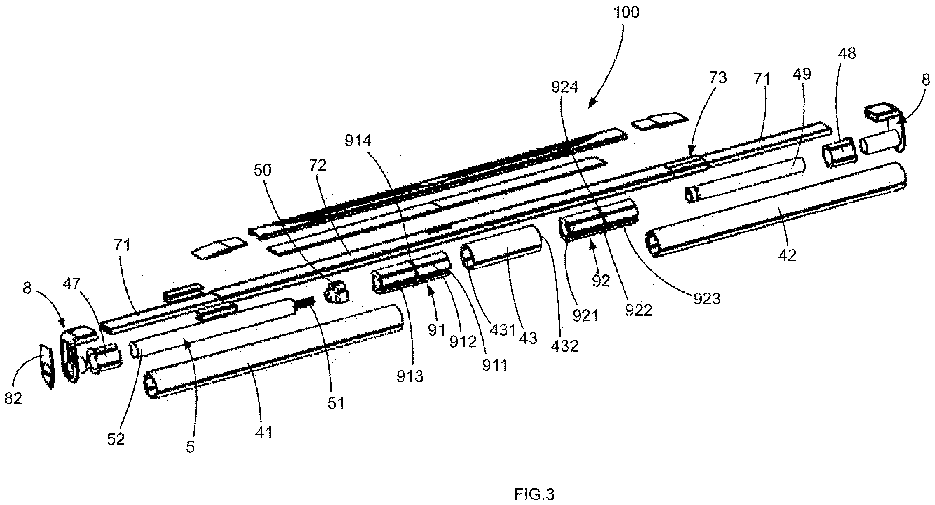

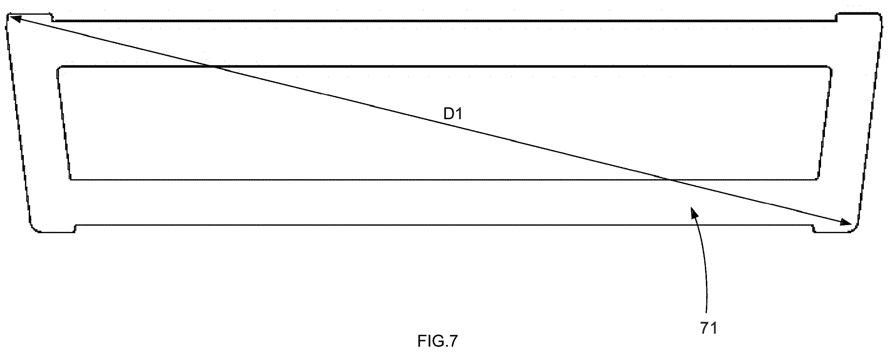

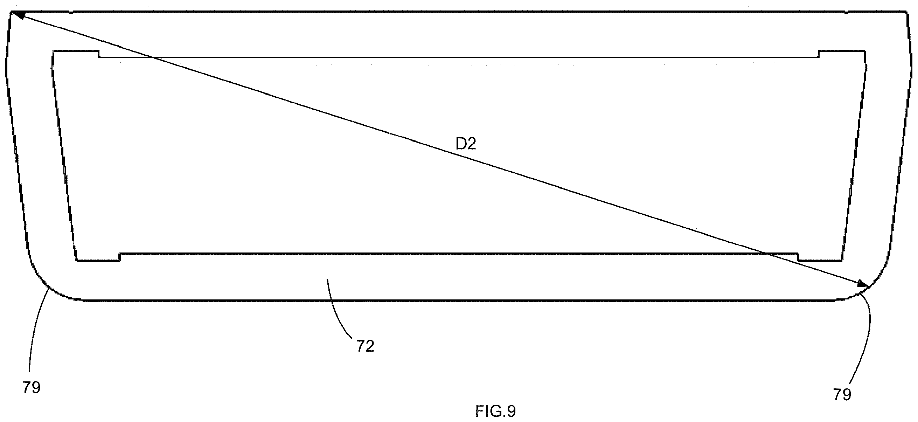

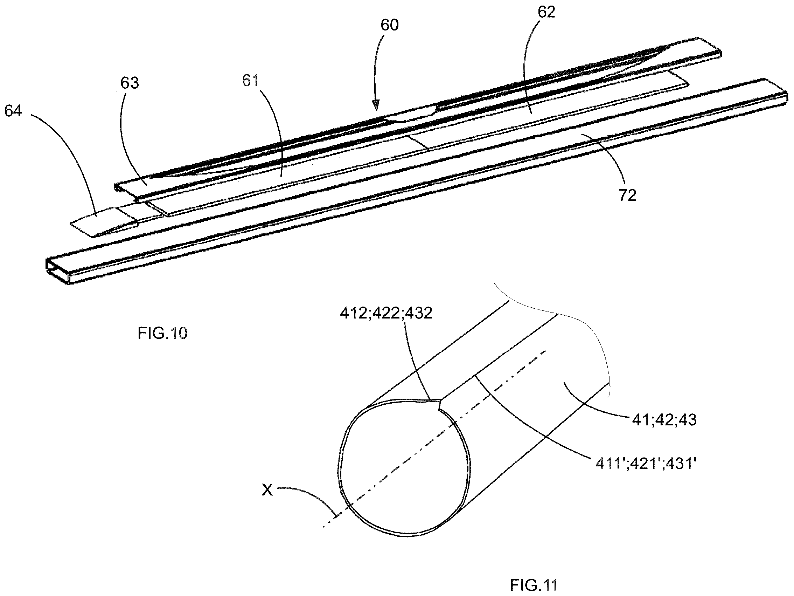

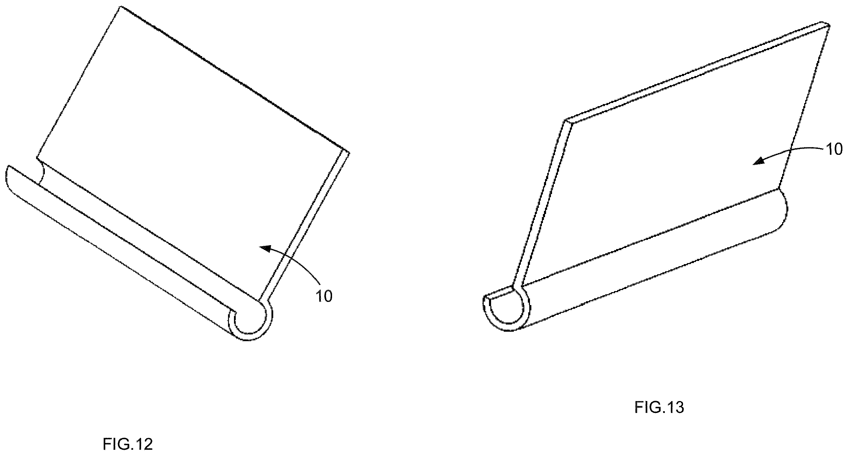

Un premier mode de réalisation d'un dispositif motorisé de manœuvre est décrit ci-après en détail en référence aux figures 2 à 14. Le dispositif motorisé de manœuvre comprend :
- un tube d'enroulement 4 mobile autour d'un premier axe longitudinal X et sur lequel la toile est destinée à s'enrouler,
- au moins un premier palier ou bague-palier 47, 48 de guidage du tube d'enroulement en rotation autour du premier axe longitudinal X,
- au moins un actionneur électromécanique 5 disposé au moins partiellement dans le tube d'enroulement,
- un premier élément de fixation 6 d'une première extrémité 21 de la toile au tube d'enroulement,
- une barre 7 de compensation du couple de déroulement agissant par contact avec la toile, et
- au moins un élément 8 de liaison mécanique de la barre de compensation au tube d'enroulement.

La liaison mécanique de la barre de compensation au tube d'enroulement se fait au travers de ou via le palier ou la bague-palier 47, 48 de guidage situé au niveau de l'actionneur et/ou d'un élément de stockage d'énergie. Le palier ou la bague-palier 47, 48 peut être monté sur l'élément 8 de liaison mécanique de la barre de compensation au tube d'enroulement ou sur l'actionneur et/ou sur l'élément de stockage d'énergie.

La toile 2 est fixée à un bâti 110, notamment une structure d'un bâtiment, comme un plafond ou un mur, ou une structure rapportée sur le bâtiment, notamment rapportée sur un plafond ou sur un mur, par un deuxième moyen de fixation 3 d'une extrémité supérieure 22 de la toile. Ce deuxième moyen de fixation est représenté schématiquement sur la figure 1 par deux rectangles. Ce deuxième moyen de fixation peut être de toute nature pourvu qu'il permette de fixer une extrémité de la toile au bâti.

L'au moins un actionneur est destiné à entraîner le tube d'enroulement en rotation relativement au reste du dispositif motorisé, notamment relativement à la barre 7 de compensation et à l'au moins un élément 8 de liaison mécanique de la barre de compensation au tube d'enroulement. Cet entraînement permet d'enrouler ou de dérouler la toile du tube d'enroulement.

Le dispositif motorisé est destiné à être lié au bâti 110 exclusivement par la toile. En particulier, le dispositif motorisé est destiné à être suspendu exclusivement par la toile. Ainsi, toutes les reprises d'efforts exercés sur le dispositif motorisé de manœuvre sont assurées par la toile. Cette toile est par ailleurs en liaison mécanique avec le bâti comme vu précédemment. De préférence, le dispositif de couverture de fenêtre ou d'écran de projection est destiné à être uniquement en liaison avec le bâti qu'il équipe par l'extrémité de la toile. Avantageusement, aucun autre contact ou liaison entre le dispositif de couverture de fenêtre ou d'écran et le bâti n'existe. En conséquence, le dispositif motorisé est de préférence quant à lui destiné à être uniquement en liaison avec la toile. Aucun contact ou liaison direct entre le dispositif motorisé et le bâti n'existant, il est possible d'atténuer de manière très efficace les vibrations transmises à la structure du bâtiment.

En particulier cette configuration de dispositif motorisé suspendu uniquement par la toile et sans autre contact avec le bâti présente notamment les avantages suivants : absence de frottements, glissement, roulement voire rebondissements de la toile (ou de tout autre élément du dispositif motorisé) sur le bâti. De ce fait, la toile est préservée d'éventuelles dégradations de contact avec le bâti ou d'une usure ou d'un vieillissement prématuré. Cette configuration permet également d'éviter la transmission de bruits solidiens vers le bâti. Elle permet par ailleurs d'obtenir une configuration de toile tendue et verticale. Dans la mesure où ces installations sont destinées à une protection solaire depuis l'intérieur du bâtiment, le contact avec le bâti n'est également pas nécessaire pour le maintien du dispositif motorisé au repos.

Pour éviter tout contact préjudiciable du dispositif motorisé avec le bâti (ou tout autre élément fixé au bâti, comme un encadrement de fenêtre par exemple), la toile doit être maintenue à son extrémité supérieure sur le bâti à l'aide d'un support ou pièce d'écartement, dont la longueur, prise perpendiculairement au bâti, est au moins supérieure au rayon d'enroulement maximum, voire au moins supérieure au rayon d'un carter entourant la toile enroulée. Dans tous les cas, le deuxième moyen de fixation 3 de l'extrémité supérieure 22 de la toile au bâti permet un déroulement de la toile sans contact avec le bâti.

La barre 7 de compensation du couple de déroulement permet d'agir sur la toile par contact pour reprendre le couple de déroulement de la toile du fait que celle-ci est enroulée sur le tube d'enroulement à son extrémité inférieure 21. Ainsi, c'est la réaction de la toile sur la barre 7 de compensation du couple de déroulement qui compense le couple de déroulement de la toile. La figure 1 représente le dispositif 1 de couverture de fenêtre ou d'écran dans une configuration partiellement enroulée de la toile sur le tube d'enroulement. A ce stade, on comprend que, du fait de la gravité et donc notamment du poids du tube d'enroulement, de la toile enroulée et de l'actionneur, il existe un couple de basculement ou de déroulement tendant à provoquer un couple rotation de l'ensemble représenté par une flèche A0, et tendant donc à provoquer le déroulement de la toile.

Il doit être noté que ce couple de basculement ou de déroulement n'est pas constant pour deux raisons cumulatives : il augmente à la fois avec la masse de toile enroulée et avec le diamètre de l'enroulement.

Or il est de l'intérêt du concepteur que la masse totale du tube d'enroulement et de l'actionneur ne soit pas trop importante, ceci afin de minimiser la consommation énergétique lors d'une manœuvre d'enroulement. Cette masse ne doit pas être trop faible non plus, afin de garantir une bonne tension de la toile, sans plis apparents. On peut donc avoir des situations où la masse de la toile est du même ordre de grandeur que la masse totale du tube d'enroulement et de l'actionneur, c'est-à-dire produisant une variation du simple au double de la masse entre une situation totalement déroulée et une situation totalement enroulée.

De plus, il est nécessaire que le diamètre du tube ne soit pas trop important, afin à la fois d'éviter un désagrément visuel dans une position d'arrêt intermédiaire, d'éviter un rapport de réduction élevé dans les organes de l'actionneur, d'éviter un coût matière plus important. Il en résulte que la variation de diamètre peut être significative entre une situation totalement déroulée et une situation totalement enroulée, par exemple une augmentation de 150 %.

Au total, le couple de basculement peut varier par exemple dans un rapport du simple au triple, ce qui est considérable.

Pour contrer ce couple de basculement ou de déroulement, la réaction de la toile sur la barre 7 de compensation du couple de déroulement crée un couple A1 s'opposant et annulant le couple A0 mentionné précédemment.

Le tube d'enroulement 4 comprend :
- une première partie 41 de tube d'enroulement entourant au moins partiellement l'actionneur 5,
- une deuxième partie 42 de tube d'enroulement entourant au moins partiellement au moins une partie d'un palier 48 de guidage du tube d'enroulement,
- une troisième partie intermédiaire 43 de tube d'enroulement,
- une première conformation 91, notamment un premier manchon 91, de liaison mécanique de première partie de tube d'enroulement à la troisième partie intermédiaire de tube d'enroulement, et
- une deuxième conformation 92, notamment un deuxième manchon 92, de liaison mécanique de deuxième partie de tube d'enroulement à la troisième partie intermédiaire de tube d'enroulement.

Le tube d'enroulement présente un axe longitudinal X (globalement un axe de révolution du tube) autour duquel il est monté mobile en rotation relativement au reste du dispositif motorisé de manœuvre, le reste du dispositif motorisé de manœuvre incluant en particulier la barre 7 de compensation et l'au moins un élément 8 de liaison mécanique de la barre de compensation au tube d'enroulement.

La première partie 41 de tube d'enroulement entoure au moins partiellement l'actionneur 5. La première partie 41 de tube d'enroulement reçoit l'actionneur 5. L'actionneur est ainsi monté dans la première partie de tube d'enroulement. La première partie 41 de tube d'enroulement reçoit également une première bague-palier 47. Cette bague-palier a pour fonction de guider en rotation le tube d'enroulement autour de l'axe X.

La deuxième partie 42 de tube d'enroulement entoure au moins partiellement une deuxième bague-palier 48. Cette bague-palier a pour fonction de guider en rotation le tube d'enroulement autour de l'axe X. Les première et deuxième bagues-paliers assurent complémentairement le guidage du tube d'enroulement relativement au reste du dispositif motorisé de manœuvre, en particulier la barre 7 de compensation et l'au moins un élément 8 de liaison mécanique de la barre de compensation au tube d'enroulement. De préférence, la deuxième partie 42 de tube d'enroulement entoure au moins partiellement un élément de stockage d'énergie électrique 49. La deuxième partie 42 de tube d'enroulement reçoit l'élément de stockage d'énergie 49. L'élément de stockage d'énergie 49 est ainsi monté dans la deuxième partie de tube d'enroulement. L'élément de stockage d'énergie peut être une batterie d'accumulateurs électrochimiques rechargeables ou non rechargeables.

Alternativement, la deuxième partie 42 de tube d'enroulement peut entourer au moins partiellement un deuxième actionneur. La deuxième partie 42 de tube d'enroulement reçoit le deuxième actionneur. Le deuxième actionneur est ainsi monté dans la deuxième partie de tube d'enroulement. Dans ce cas, les deux actionneurs respectivement montés dans les première et deuxième parties de tube d'enroulement sont avantageusement du type incluant un élément de stockage d'énergie électrique. De préférence, dans une telle réalisation, une unité électronique de synchronisation des activations des actionneurs est prévue. L'unité électronique de synchronisation peut être distincte des actionneurs. L'unité électronique de synchronisation peut alternativement être intégrée à l'un des actionneurs qui est de type maître, l'autre actionneur étant de type esclave. L'unité électronique de synchronisation peut communiquer de manière filaire et/ou radio avec les deux actionneurs.

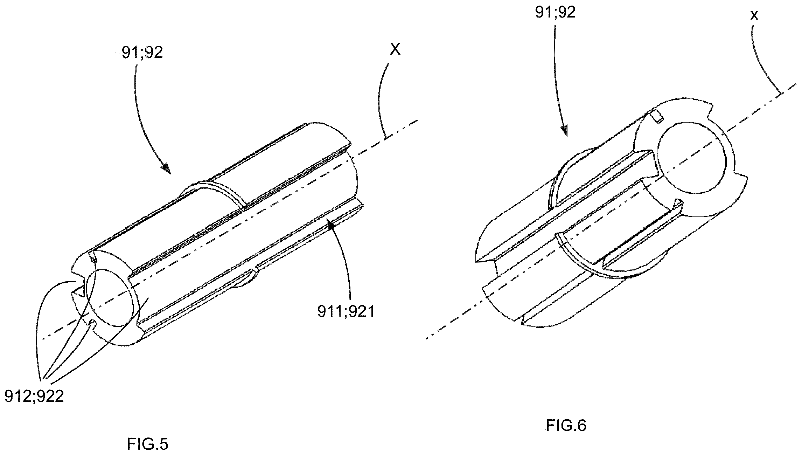

De préférence, comme représenté sur les figures 5 et 6, la première conformation 91 est un premier manchon 91 monté serré dans la première partie 41 de tube et monté serré dans la troisième partie de tube 43. A cet effet, le premier manchon comprend une première portion 911 épaulée montée serrée dans la troisième partie intermédiaire de tube d'enroulement et une deuxième portion 913 épaulée montée serrée dans la première partie de tube d'enroulement. Ces première et deuxième portions sont séparées par une portion intermédiaire 914 formant un épaulement.

La première portion peut comprendre des cannelures 912 et/ou des rainures et peut être montée serrée dans une portion 431 complémentaire de la troisième partie intermédiaire de tube d'enroulement. De même, la deuxième portion peut comprendre des cannelures et/ou des rainures et peut être montée serrée dans une portion complémentaire de la première partie de tube d'enroulement. Les sections des première et deuxième portions peuvent être identiques. Le premier manchon peut avoir une géométrie symétrique par rapport à sa portion intermédiaire 914.

De même, de préférence, la deuxième conformation 92 est un deuxième manchon 92 monté serré dans la deuxième partie 42 de tube et monté serré dans la troisième partie de tube 43. A cet effet, le deuxième manchon comprend une première portion 921 épaulée montée serrée dans la troisième partie intermédiaire de tube d'enroulement et une deuxième portion 922 épaulée montée serrée dans la deuxième partie de tube d'enroulement. Ces première et deuxième portions sont séparées par une portion intermédiaire 924 formant un épaulement.

La première portion peut comprendre des cannelures 922 et/ou des rainures et peut être montée serrée dans une portion 432 complémentaire de la troisième partie intermédiaire de tube d'enroulement. De même, la deuxième portion peut comprendre des cannelures et/ou des rainures et peut être montée serrée dans une portion complémentaire de la deuxième partie de tube d'enroulement. Les sections des première et deuxième portions peuvent être identiques. Le deuxième manchon peut avoir une géométrie symétrique par rapport à sa portion intermédiaire 924.

De préférence, les premier et deuxième manchons sont identiques. Les premier et deuxième manchons peuvent aussi être des images l'un de l'autre par symétrie.

De préférence, les manchons sont montés serrés dans les première, deuxième et troisième parties de tube d'enroulement.

Avantageusement, l'actionneur 5 comprend un arbre de sortie 51 sur lequel une roue d'entraînement est montée en liaison serrée ou complète ou en liaison glissière. De même, la roue d'entraînement est montée en liaison serrée ou complète ou en liaison glissière dans le premier manchon ou dans la première partie de tube. La roue d'entraînement a pour fonction de transmettre le mouvement de l'actionneur au tube d'enroulement, notamment à la première partie de tube d'enroulement ou au premier manchon. Ainsi, le premier manchon et/ou la première partie de tube est monté solidaire de l'arbre 51 de sortie de l'actionneur électromécanique.

L'actionneur 5 comprend une première partie 52, notamment un stator de motoréducteur ou un carter de motoréducteur, qui est solidaire en rotation de l'au moins un élément 8 de liaison mécanique de la barre de compensation au tube d'enroulement.

Les première partie, deuxième partie et troisième partie de tube d'enroulement présentent chacune de préférence une section transversale de géométrie constante sur toute leur longueur. Les parties de tube d'enroulement peuvent donc être réalisées par extrusion. Avantageusement encore, les géométries des sections transversales des différentes parties peuvent être identiques entre elles.

Dans une variante de réalisation du tube d'enroulement, la première partie de tube d'enroulement présente une extrémité formant la première conformation et la deuxième partie de tube d'enroulement présente une extrémité formant la deuxième conformation. Dans ce cas, les sections transversales des première et deuxième parties de tube d'enroulement peuvent évoluer à l'approche de l'une de leurs extrémités. Dans cette variante, il n'y a donc pas de manchon interfaçant les différentes parties de tube d'enroulement. Les parties de tubes présentent elles-mêmes des conformations d'interface destinées à coopérer avec la partie de tube adjacente.

Le premier élément de fixation 6 d'une première extrémité 21 de la toile au tube d'enroulement permet d'accrocher la toile au tube d'enroulement, notamment l'extrémité inférieure 21 de la toile au tube d'enroulement.

Le premier élément de fixation 6 comprend au moins une première fente formée dans le tube d'enroulement et destinée à recevoir une extrémité de la toile. L'au moins une première fente comprend au moins une fente 411, 413 sur la première partie de tube et au moins une fente 421, 423 sur la deuxième partie de tube et au moins une fente 431, 433 sur la troisième partie intermédiaire de tube.

Ainsi, différentes fentes réalisées dans les différentes parties du tube d'enroulement sont disposées en alignement les unes aux autres pour constituer au moins une fente s'étendant sur toute la longueur du tube d'enroulement.

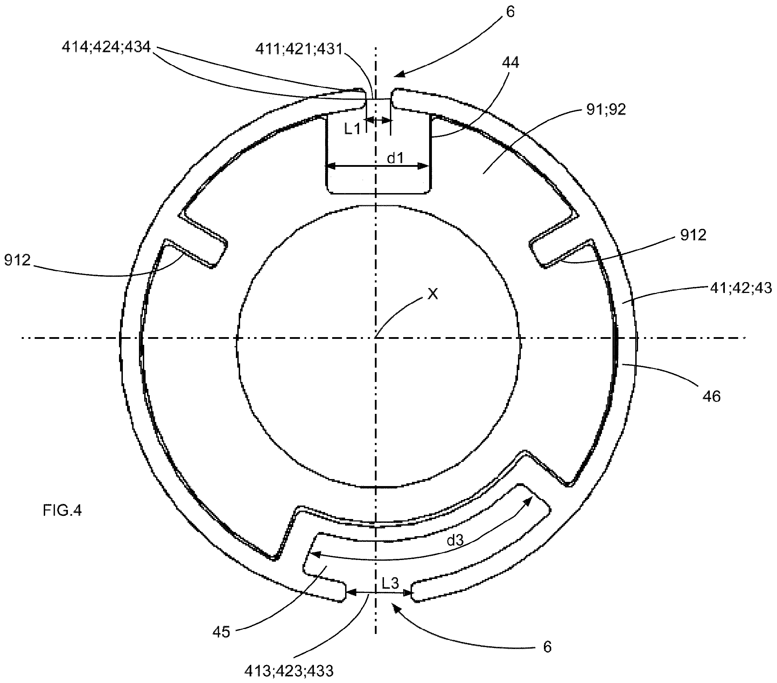

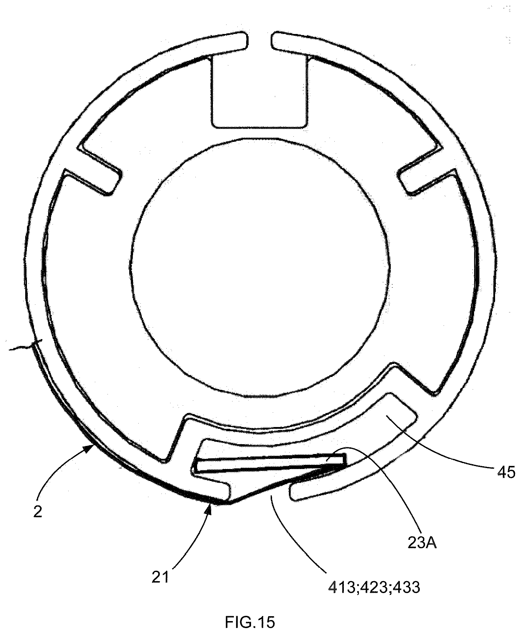

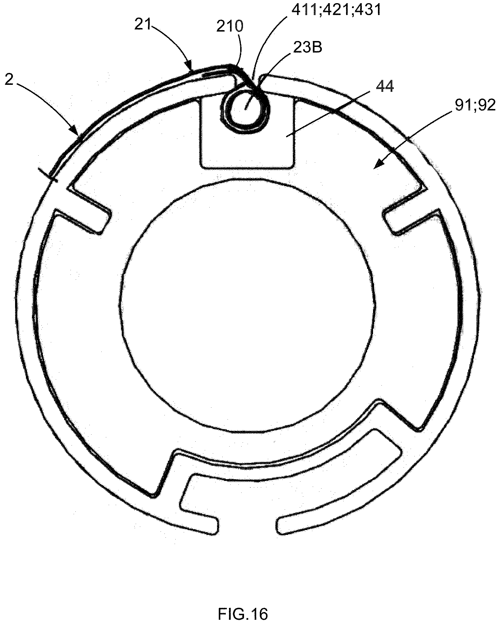

Dans le mode de réalisation représenté sur la figure 4, deux fentes sont réalisées chaque fente permettant de recevoir une extrémité 21 de toile comme représenté sur les figures 15 et 16

Comme représenté sur la figure 15, un premier type de fente 413, 423, 433 du tube d'enroulement est utilisée pour assurer la fixation de l'extrémité 21 de la toile. L'extrémité peut être fixée, par exemple collée ou cousue ou soudée à une baguette 23A présentant une section transversale rectangulaire ou sensiblement rectangulaire. Pour ce faire, l'extrémité et la baguette coopèrent avec la fente et avec une rainure 45 de logement d'extrémité de toile réalisée au niveau de la fente dans le tube d'enroulement. La rainure présente une section transversale rectangulaire ou sensiblement dont une dimension d3, s'étendant notamment orthoradialement à l'axe X du tube d'enroulement, est supérieure à la largeur L3 de la fente. La rainure 45 est conformée pour recevoir la baguette 23A. La longueur de la section transversale de la baguette 23A est quant à elle supérieure à la largeur L3 de la fente et à la hauteur de la rainure 45 mesurée radialement à l'axe X du tube d'enroulement. La fente est avantageusement disposée asymétriquement relativement à la dimension d3, c'est-à-dire plus près d'une extrémité de la rainure que de l'autre extrémité de la rainure relativement à la dimension d3. La fente 413, 423, 433, la rainure 45 et la baguette 23A ont des dimensions de sections telles que la baguette puisse être introduite dans la rainure 45, via la fente 413, 423, 433, sans déplacement de translation de la baguette relativement au tube d'enroulement selon l'axe X.

Comme représenté sur la figure 16, un deuxième type de fente 411, 421, 431 du tube d'enroulement est utilisé pour assurer la fixation de l'extrémité 21 de la toile. L'extrémité peut présenter un repli ou ourlet, par exemple un repli ou ourlet maintenu par un collage 210 et/ou une couture 210. Ainsi, une baguette 23B, par exemple une baguette présentant une section circulaire ou sensiblement circulaire peut être engagée dans le repli. Pour assurer la fixation de la toile au tube d'enroulement, l'extrémité et la baguette coopèrent avec la fente et avec une rainure 44 de logement d'extrémité de toile réalisée au niveau de la fente dans les première et deuxième conformations 91 et 92, notamment dans les manchons. La rainure 44 présente une section transversale rectangulaire ou sensiblement dont une dimension d1, s'étendant notamment orthoradialement à l'axe X du tube d'enroulement, est supérieure à la largeur L1 de la fente. La rainure 44 est conformée pour recevoir la baguette 23B. La plus petite dimension de la section transversale de la baguette 23B est quant à elle supérieure à la largeur L1 de la fente. La fente 411, 421, 431 et la baguette 23B ont des dimensions de sections telles que la baguette ne puisse pas être introduite dans la rainure 44, via la fente 411, 421, 431 sans déplacement de translation de la baguette et de la toile relativement au tube d'enroulement selon l'axe X.

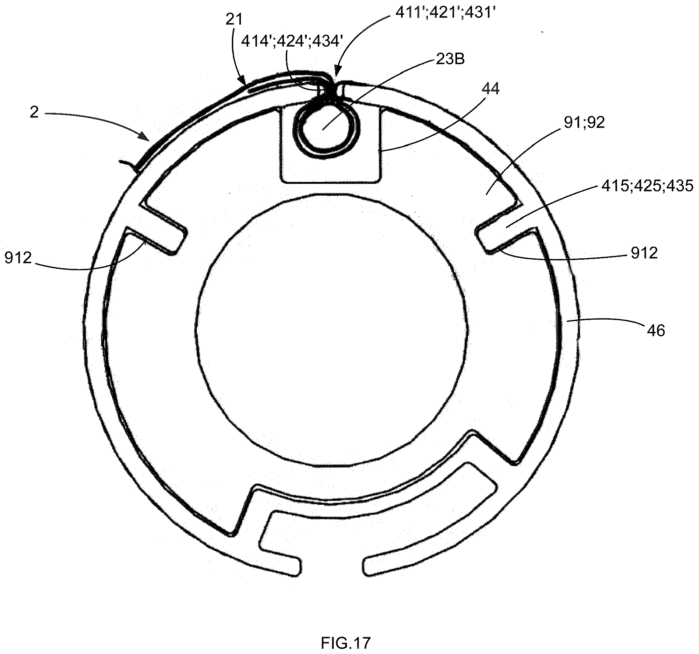

Comme représenté sur la figure 17, un troisième type de fente 411', 421', 431' du tube d'enroulement est utilisé pour assurer la fixation de l'extrémité 21 de la toile. Le troisième type de fente et le troisième type de fixation diffèrent du deuxième type de fente et du deuxième type de fixation en ce que :
- l'extrémité de la toile présente un repli ou ourlet, mais celui-ci n'est pas maintenu ; ou
- le repli ou ourlet est plus exactement maintenu par le tube d'enroulement ; en particulier les deux bords opposés de la fente 411', 421', 431' qui sont rappelés l'un contre l'autre maintiennent le repli.

Pour ce faire, le tube d'enroulement comprend un élément de rappel élastique 46 ; 912 ; 415, 425, 435 rappelant l'au moins une fente dans une position fermée dans laquelle les deux bords 414' ; 424' ; 434' de la fente sont en contact l'un contre l'autre et qui permettent donc de pincer la toile. Avantageusement, cet élément de rappel est réalisé par l'élasticité du tube d'enroulement. Par exemple, l'élément de rappel élastique peut comprendre au moins une partie 46 élastique de la section du tube d'enroulement ou, de préférence, l'élément de rappel élastique peut être constitué par l'ensemble de la section du tube d'enroulement. Complémentairement ou alternativement, l'élément de rappel élastique peut comprendre un élément d'un manchon de liaison de parties de tube 41, 42, 43 et un élément de partie de tube, notamment au moins deux rainures 912 dans les manchons et destinées à coopérer avec au moins deux nervures 415, 425, 435 sur les différentes parties de tube. Alternativement, les nervures pourraient être réalisées sur les manchons et les rainures dans les parties de tube. Dans tous les cas, les nervures et les rainures sont dimensionnées et positionnées de sorte que lorsque les manchons sont introduits dans les parties de tube, les deux bords 414' ; 424' ; 434' sont rapprochés l'un de l'autre, voire maintenus en pression contre la toile lorsqu'une toile est disposée dans la fente, voire maintenus en pression l'un contre l'autre en l'absence de toile dans la fente. Lorsque les deux bords sont en contacts l'un contre l'autre, le tube peut tout de même être déformé au voisinage de la fente pour introduire une toile dans celle-ci. Cette introduction de toile est avantageusement réalisée en déplaçant la toile en translation selon l'axe X relativement au tube d'enroulement.

Pour faciliter cette introduction, l'au moins une fente 414' ; 424' ; 434' comprend au moins à une de ses extrémité une partie 412 ; 422 ; 432 évasée ou biseautée. De manière avantageuse, chaque fente 414' ; 424' ; 434' de chaque partie de tube comprend au moins à une de ses extrémité une partie 412 ; 422 ; 432 évasée ou biseautée.

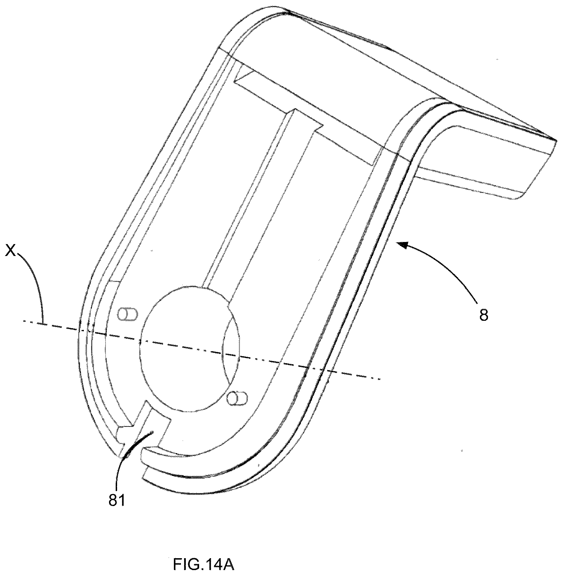

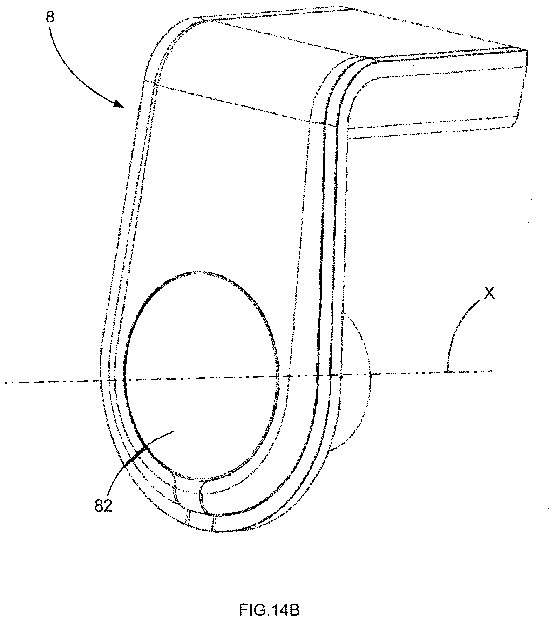

Comme vu précédemment, au moins un élément 8 de liaison mécanique permet d'assurer la liaison mécanique de la barre de compensation au tube d'enroulement. De tels éléments de liaisons sont décrits ci-après en référence aux figures 14A et 14B. Plus généralement, au moins un élément 8 de liaison mécanique permet d'assurer la liaison mécanique de la barre de compensation à l'actionneur ou à l'élément de stockage d'énergie électrique. De manière avantageuse, le dispositif motorisé de manœuvre comprend un élément 8 de liaison mécanique à chacune de ses extrémités. Chaque élément de liaison permet de lier mécaniquement une bague palier à une extrémité de la barre de compensation, notamment de maintenir un entraxe entre l'axe X du tube d'enroulement et la barre de compensation.

Avantageusement, chaque élément de liaison comprend de préférence un flasque s'étendant principalement ou sensiblement perpendiculairement à l'axe longitudinal X et un premier élément de support de la barre de compensation et un deuxième élément de support :
- d'une bague-palier ; et/ou
- d'un actionneur ; et/ou
- d'un élément de stockage d'énergie électrique.

Chaque flasque relie mécaniquement un premier élément de support et un deuxième élément de support.

Par «flasque», on entend un élément de faible épaisseur et/ou présentant principalement des surfaces planes. De préférence, un flasque a sensiblement une forme de plaque, en particulier de plaque plane.

Les flasques peuvent permettre de masquer et de protéger les parties latérales de la toile enroulée et éventuellement de guider celles-ci pour éviter qu'un obstacle vienne modifier la bonne marche des manœuvres. Les flasques mentionnés précédemment permettent de maximiser la longueur du tube d'enroulement pour un encombrement donné. En conséquence, lorsque le dispositif motorisé est destiné à la manœuvre d'une toile de store disposée dans un encadrement d'une ouverture d'un bâtiment, il est possible de maximiser la largeur de la toile de store et donc de minimiser le jour (light gap) entre l'encadrement et la toile.

L'au moins un élément de liaison mécanique de la barre de compensation au tube d'enroulement comprend une rainure 81 de passage de la toile. Cette rainure permet le passage de la toile pour la glisser dans une rainure de logement d'extrémité de toile du tube d'enroulement.

L'au moins un élément de liaison mécanique de la barre de compensation au tube d'enroulement comprend un capuchon amovible 82 d'obturation au moins partielle de la rainure 81 de passage de la toile. Avantageusement, le capuchon permet d'obturer complètement la rainure 81 de passage de la toile. Le capuchon peut être clippé sur le reste de l'élément de liaison 8.

L'élément de liaison 8 peut être clippé ou monté serré sur la barre de compensation pour éviter tout montage par des éléments de liaison tels que des vis visibles. Les bagues paliers peuvent être clippées ou montées serrées ou montées glissantes sur les éléments de liaison 8.

Comme vu précédemment, la barre 7 de compensation du couple de déroulement agit par contact avec la toile. Un mode de réalisation de barre de compensation est décrit ci-après en référence aux figures 2, 3 et 7 à 10.

Dans le mode de réalisation représenté notamment sur les figures 1 à 10, la barre de compensation du couple de déroulement est du type télescopique. Elle comprend deux premières portions 71 présentant une première dimension D1 de section transversale et une deuxième portion centrale 72 présentant une deuxième dimension D2 de section transversale, la première dimension étant inférieure à la deuxième dimension. Les premières portions coulissent dans la deuxième portion. Optionnellement, un élément élastique peut rappeler élastiquement les première portions dans une position dans laquelle les premières portions sortent le plus de la deuxième portion centrale. Ainsi, une sollicitation mécanique doit être appliquée sur la barre de compensation pour réduire sa longueur. En l'absence de sollicitation, elle revient dans sa configuration d'origine de longueur maximale.

La barre de compensation comprend aussi deux profilés 73 de recouvrement des deux premières portions. Ces profilés permettent de compenser la différence géométrique existant entre les sections transversales des premières et deuxième portions et en conséquence d'assurer un contact continu de la toile et de la barre de compensation sur toute la largeur de la toile. Avantageusement, la deuxième portion et les profilés constituent de manière complémentaire une arête ou une surface 79 de contact de la barre pour recevoir le contact de la toile. La surface de contact est avantageusement une portion de surface cylindrique (au sens mathématique du terme) s'étendant sur toute la largeur de la toile, la surface présentant des génératrices parallèles ou sensiblement parallèles à l'axe longitudinal X. De préférence, le rayon de courbure minimal de la surface de contact (mesuré dans un plan perpendiculaire à l'axe longitudinal X) est supérieur à 1 mm ou à 2 mm ou à 3 mm.

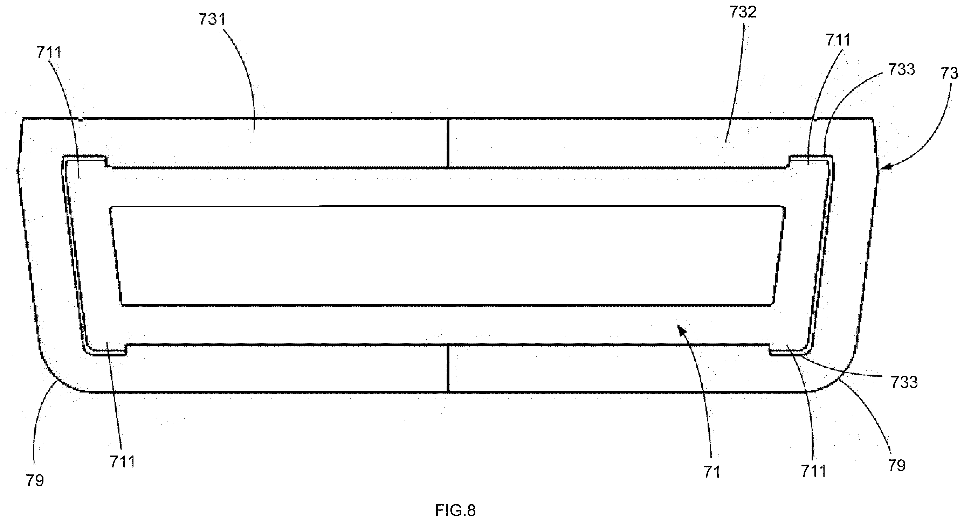

Comme représenté sur la figure 8, l'au moins une première portion comprend un premier moyen de fixation 711 du profilé de recouvrement, notamment au moins une nervure 711. De même, le profilé de recouvrement comprend un deuxième moyen de fixation 733 du profilé de recouvrement, notamment au moins une rainure 733. Ainsi, la ou les rainures et la ou les nervures coopèrent par engagement l'une dans l'autre pour maintenir le profilé de recouvrement sur la première portion. Le profilé de recouvrement peut ainsi se clipper sur la première portion de barre.

Bien entendu, les éléments pourraient être inversés et la ou les rainures pourraient être prévues sur la première portion et la ou les nervures pourraient être prévues sur le profilé de recouvrement.

Avantageusement, le profilé de recouvrement est réalisé par deux éléments complémentaires 731, 732 de profilé ayant chacun une section transversale en U. Les deux éléments 731, 732 forment ensemble, une fois assemblés sur la première de portion, le profilé dont le pourtour extérieur de la section transversale est identique ou similaire au pourtour extérieur de la section transversale de la deuxième portion, au moins au niveau de la surface 79 de contact.

La fixation du profilé pourrait encore être réalisée autrement. Par exemple, les deux éléments de profilé pourraient être fixés l'un à l'autre, notamment par clippage, sans qu'ils soient chacun individuellement fixé à la première portion de barre. Dans ce cas, le profilé entoure seulement la première portion de barre.

De préférence, une fois le profilé fixé sur une première portion de barre de compensation, il empêche cette première portion de pénétrer dans une deuxième portion. Il s'ensuit que sauf à enlever le profilé de recouvrement (ou à l'endommager), la longueur de la barre de compensation ne peut être diminuée.

La reprise de couple par la barre de compensation est adaptée au sens d'enroulement de la toile. La barre de compensation peut être située à l'avant de la toile (visible par un utilisateur à l'intérieur du bâtiment) ou à l'arrière de la toile (masqué à l'utilisateur par la toile elle-même pour l'utilisateur à l'intérieur du bâtiment). Dans le cas où la barre de compensation supporte un panneau photovoltaïque, il est évidemment plus intéressant que celui-ci soit tourné vers l'extérieur, c'est-à-dire vers le vitrage dans le cas d'un store intérieur. Dans ce cas, le sens d'enroulement de toile est choisi de sorte à ce que la barre de compensation soit tournée vers l'extérieur (vers la fenêtre). Ce sens de configuration est le sens préféré. En effet, dans sa configuration suspendue, le dispositif motorisé bascule légèrement par rapport à l'axe vertical (l'axe de rotation du tube se décale par rapport au plan dans lequel s'étend la toile). De ce fait, dans le sens de configuration préféré, le tube d'enroulement s'éloigne du bâti et minimise ainsi les cas possibles de contact avec le bâti. Cependant, l'autre sens de montage est tout à fait envisageable, avec une longueur du support de la toile au bâti appropriée. Dans tous les cas, le choix peut être laissé à l'utilisateur selon ses propres critères esthétiques.

Dans la variante de réalisation précédemment décrite, la barre comprend deux premières portions latérales et une deuxième portion centrale.

En alternative, la barre peut comprendre une seule première portion centrale et deux deuxièmes portions latérales coulissant sur la première portion centrale.

En alternative encore, la barre peut comprendre une seule première portion et une seule deuxième portion coulissant sur la première portion.

En alternative encore, la barre peut comprendre une seule portion monobloc. La barre n'est alors pas télescopique. La barre doit ainsi être mise à longueur correcte avant montage du dispositif motorisé de manœuvre.

En variante, le profilé de recouvrement pourrait s'étendre continûment sur toute la longueur du tube d'enroulement et recouvrir les premières portions comme les deuxièmes portions.

Dans les différentes variantes de réalisation, les barres de compensation sont avantageusement réalisées en matière plastique, voire en matière métallique. En particulier, les différentes portions de barre peuvent être chacune réalisées en matière plastique, voire en matière métallique.

Dans les différentes variantes de réalisation, les barres de compensation sont avantageusement réalisées en profilé creux, notamment en profilé à section rectangulaire ou sensiblement rectangulaire. En particulier, les différentes portions de barre peuvent être chacune réalisées en profilé creux, notamment en profilé à section rectangulaire ou sensiblement rectangulaire.

La barre de compensation comprend avantageusement une surface pouvant être utilisée pour l'implantation d'un dispositif de panneau photovoltaïque 60. La géométrie de la barre de compensation peut être définie de sorte que l'inclinaison du panneau photovoltaïque fixé à la barre puisse être optimale.

Le dispositif de panneau photovoltaïque 60 comprend par exemple un panneau ou deux panneaux photovoltaïques 61, 62. Ces panneaux sont par exemple côte à côte sur la barre de compensation. Le dispositif de panneau 6 comprend encore un support 63, 64 rapporté sur la barre de compensation et destinée à recevoir le ou les panneaux. Le support peut par exemple comprendre un rail 63 d'axe parallèle à l'axe X et des bouchons 64 destinés à être emboîtés aux deux extrémités du rail. Ainsi, le ou les panneaux photovoltaïques peuvent être glissés dans le rail, puis, une fois en place, les extrémités du rail peuvent être bouchées à l'aide des bouchons pour éviter toute sortie du ou des panneaux.

Le panneau photovoltaïque peut alternativement être fixé sur la barre de compensation de toute autre manière.

Un dispositif de panneau photovoltaïque permet de rendre le dispositif motorisé totalement autonome si le dispositif de panneau photovoltaïque peut être suffisamment éclairé. Dans les autres cas, l'élément de stockage d'énergie électrique peut être une batterie d'accumulateurs non rechargeable. Il est aussi possible de combiner les deux solutions, c'est-à-dire de combiner :
- un stockage par batterie d'accumulateurs rechargeable de l'énergie en provenance d'un panneau photovoltaïque, et
- un stockage par batterie d'accumulateurs non rechargeable.

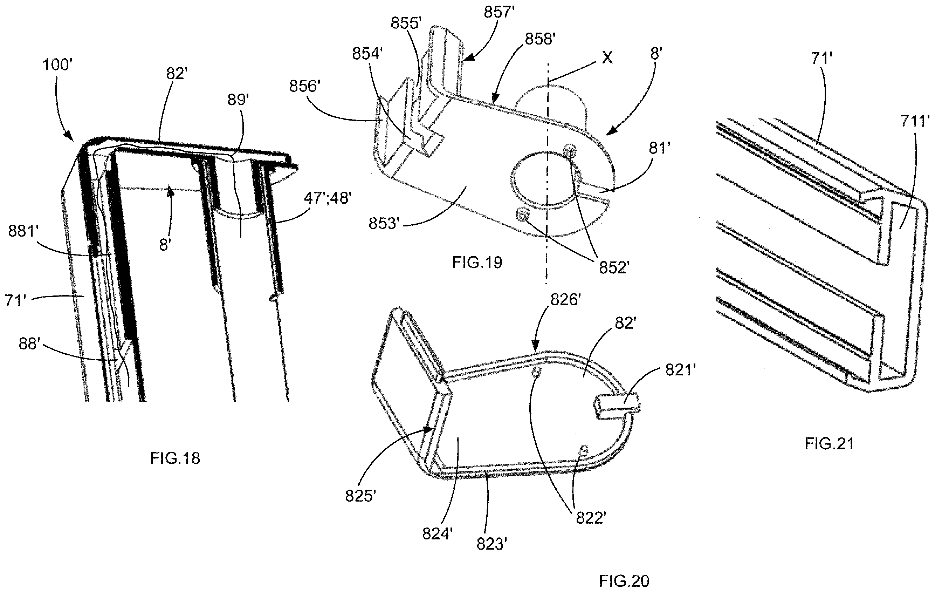

Un deuxième mode de réalisation d'un dispositif 100' motorisé de manœuvre est décrit ci-après en référence aux figures 18 à 21. Le dispositif motorisé de manœuvre diffère du premier mode de réalisation au niveau de la liaison barre de compensation 71' au tube d'enroulement.

Cette liaison est assurée principalement par au moins un élément 8' de liaison mécanique de la barre de compensation 71' au palier 47', 48' de guidage du tube d'enroulement au niveau de l'actionneur ou au niveau d'un élément de stockage d'énergie.

L'élément de liaison mécanique comprend principalement une première aile 858' et une deuxième aile 857'.

Un capuchon amovible 82' comprend lui aussi principalement une première aile 826' et une deuxième aile 825'. Ces ailes sont destinées à couvrir les ailes de l'élément de liaison mécanique, notamment en positionnant le capuchon par un mouvement de translation du capuchon relativement à l'élément de liaison mécanique selon l'axe X. Des éléments de guidage et/ou de fixation sont prévus sur le capuchon et sur l'élément de liaison. Les bords latéraux de la deuxième aile 825' sont par exemple configurés pour coulisser dans une glissière 856' prévue sur la deuxième aile de l'élément de liaison 8'. Des pions 822' sont par exemple prévus sur la première aile 826' pour pénétrer dans des trous 852' prévus dans la première aile de l'élément de liaison.

De préférence, la première aile du capuchon 82' (et/ou la première aile 858' de l'élément de liaison) comprend un rebord 823' agencé de sorte à éviter que les faces 853' et 824' des premières ailes ne soient en contact une fois le capuchon fixé sur l'élément de liaison.

Le capuchon comprend de préférence une conformation 821' destinée à venir masquer ou boucher au moins partiellement la rainure 81' de passage de toile.

Par ailleurs, la fixation de l'élément de liaison 8' à la barre de compensation est effectuée à l'aide d'une pièce d'interface 88' introduite serrée dans une ouverture 711' prévue à une extrémité de la barre de compensation et introduite serrée dans une ouverture 855' prévue dans la deuxième aile 857' de l'élément de liaison. Alternativement, la pièce d'interface 88' pourrait être bloquée par des vis de pression qui appuient sur l'un des bords de l'ouverture 711' et de la même manière sur l'un des bords de l'ouverture 855' prévue dans la deuxième aile 857' de l'élément de liaison. Dans une autre alternative la pièce d'interface 88' pourrait être intégrée soit à l'élément de liaison 8' soit à la barre de compensation, le positionnement dans l'autre pièce étant soit monté serré soit en utilisant une vis de pression.

Cette pièce d'interface présente une rainure 881', notamment une rainure longitudinale 881'. La deuxième aile 857' de l'élément de liaison 8' présente également une rainure 854'. Ces deux rainures ainsi que l'espace ménagé entre les faces 824' et 853' comme vu précédemment permettent de ménager un espace de passage de câble électrique 89' entre l'intérieur de la barre de compensation et l'intérieur du tube d'enroulement.

Un mode d'exécution d'un procédé de fabrication ou de réalisation d'un dispositif 100 motorisé de manœuvre selon la description précédente est décrit ci-après.

On suppose qu'un ensemble de pièces (telles que décrites précédemment) en kit est commercialisé et livré à un installateur domotique ou à un utilisateur final.

Le kit comprend exclusivement ou principalement :
- un premier module comprenant un premier ensemble assemblé comprenant l'actionneur 5, la première partie de tube 41, un premier élément 8 de liaison mécanique de la barre de compensation au tube d'enroulement, la première bague-palier 47, la roue d'entraînement 50 et la première conformation 91 ;
- un deuxième module comprenant un deuxième ensemble assemblé comprenant élément de stockage d'énergie électrique 49, la deuxième partie de tube 42, un premier élément 8 de liaison mécanique de la barre de compensation au tube d'enroulement, la deuxième bague-palier 48 et la deuxième conformation 92 ;
- la barre de compensation 7 sur laquelle est éventuellement monté le dispositif de panneau photovoltaïque ;
- la troisième partie de tube 43.

Le kit permet de fabriquer ou de réaliser un dispositif motorisé de manœuvre dont la longueur du tube d'enroulement peut être définie sur mesure par l'installateur ou par l'utilisateur final. Il permet ainsi de réaliser *in fine* un store motorisé sur mesure, c'est-à-dire dont la largeur correspond à une dimension d'une ouverture de bâtiment que l'on souhaite couvrir ou à une dimension d'une toile dont l'utilisateur dispose déjà ou à tout autre critère.

Dans la description qui suit, le pronom personnel « on » désigne l'installateur domotique ou l'utilisateur final.

Dans une première étape, on détermine la longueur K du tube d'enroulement que l'on souhaite obtenir pour enrouler la toile de store.

Pour ce faire, on peut par exemple calculer la longueur K à partir d'une mesure d'une largeur de la toile qu'on désire enrouler sur le tube d'enroulement. Dans ce cas, par exemple, la longueur K est égale à la largeur de la toile ou à la largeur de la toile augmentée de quelques millimètres. Alternativement ou complémentairement, on peut par exemple calculer la longueur K à partir d'une mesure d'un logement pour ce dispositif 100 motorisé de manœuvre. Dans ce cas, par exemple, la longueur K est égale à cette mesure de logement diminuée d'une valeur donnée.

Dans une deuxième étape, on détermine la longueur I de la troisième partie intermédiaire de tube d'enroulement. Cette valeur I peut être déterminée par une table fournie par le fabricant du kit ou par une relation affine fournie par le fabricant telle que I = K - A avec A une constante.

Dans une troisième étape, on découpe ou on tronçonne la troisième partie de tube fournie dans le kit pour obtenir une troisième partie de tube de longueur I.

Dans une quatrième étape, on assemble la troisième partie de tube à la première partie de tube et à la deuxième partie de tube. Il s'ensuit que les premier et deuxième modules évoqués précédemment se retrouvent liés par la troisième partie de tube.

Dans une cinquième étape, on détermine la longueur J de la barre de compensation. Cette valeur J peut être déterminée par une table fournie par le fabricant du kit ou par une relation affine fournie par le fabricant telle que J = K - B avec B une constante.

Dans une sixième étape, on découpe la barre de compensation si le kit comprend une barre de compensation monobloc à découper à longueur ou on découpe le profilé de recouvrement si le kit comprend une barre de compensation de type télescopique.

Dans une septième étape, on assemble la barre de compensation aux éléments 8 de liaison mécanique.

Dans une huitième étape, on met éventuellement en place le profilé de recouvrement sur la barre de compensation, notamment par clippage.

Un mode d'exécution d'un procédé de fabrication ou de réalisation d'un dispositif 1 de couverture de fenêtre ou d'écran, notamment d'écran de projection selon la description précédente est décrit ci-après.

Dans une première étape, on fournit un dispositif motorisé tel que décrit précédemment et une toile 2.

Dans une deuxième étape, on positionne le tube d'enroulement de sorte que l'au moins une fente 411, 421, 431, 411', 421', 431' soit placée en vis-à-vis d'une rainure 81 de passage de la toile de l'au moins un élément 8 de liaison mécanique d'une barre de compensation au tube d'enroulement. Ceci est réalisé par alimentation successive de l'actionneur jusqu'à obtention du positionnement souhaité.

Dans une troisième étape, on met en forme l'extrémité inférieure de la toile que l'on souhaite accrocher au tube d'enroulement. Pour ce faire, on peut dans un premier temps former un repli de l'extrémité inférieur de la toile. On veillera ici à former un bord inférieur précisément perpendiculaire aux bords latéraux de la toile à enrouler de manière à assurer un enroulement propre de la toile sur le tube d'enroulement. Dans un deuxième temps, on met en place un élément de maintien du repli. Par exemple, le repli peut être maintenu sur une baguette 23B à l'aide de clips 10 mis en place autour de la baguette et de la toile et serrant la toile sur la baguette. Alternativement, le repli peut être maintenu par couture et/ou par collage. Dans ce cas, on forme un ourlet dans lequel la baguette 23B peut être introduite ou mise en place.

Dans une quatrième étape, on met en place la toile dans l'au moins une fente 411, 421, 431, 411', 421', 431'. Pour ce faire, on passe la toile et la baguette dans la rainure 81 et on vient la loger dans la rainure de logement de baguette 44. La toile est quant à elle mise en place dans la fente en la faisant glisser en translation parallèlement à l'axe longitudinal X. Les clips 10 peuvent être retirés au fur et à mesure que la toile pénètre dans la fente.

Dans une cinquième étape, une fois la toile mise en place sur le tube d'enroulement, on met en place un capuchon amovible 82 d'obturation au moins partielle de la rainure 81 de passage de la toile. Le capuchon est par exemple clippé sur le flasque.

La structure du dispositif de couverture de fenêtre ou d'écran de projection décrite précédemment permet son implantation aisée et esthétique quelle que soit la géométrie de la structure du bâtiment au niveau de sa zone de fixation. En particulier, le dispositif peut être implanté aisément au niveau de linteaux d'ouvertures non rectilignes et/ou non horizontaux, comme des linteaux ayant une forme arquée ou des linteaux inclinés.

## Revendications

1. Dispositif (100) motorisé de manœuvre pour écran mobile à toile enroulable (2) d'un dispositif (1) de couverture de fenêtre ou d'écran, notamment d'écran de projection, le dispositif motorisé de manœuvre étant destiné à être suspendu par la toile et comprenant :
- un tube d'enroulement (4) mobile autour d'un premier axe (X) et sur lequel la toile est destinée à s'enrouler,
- au moins un actionneur électromécanique (5) disposé au moins partiellement dans le tube d'enroulement,
- un premier élément de fixation (6) d'une première extrémité de la toile au tube d'enroulement,
- une barre (7) de compensation du couple de déroulement agissant par contact avec la toile,
- au moins un élément (8) de liaison mécanique de la barre de compensation au tube d'enroulement (4),
**caractérisé en ce que** le premier élément de fixation (6) comprend au moins une première fente (411, 421, 431 ; 413; 423; 433) formée dans le tube d'enroulement et destinée à recevoir une extrémité de la toile et **en ce que** l'au moins une fente comprend au moins à une de ses extrémités une partie (412 ; 422 ; 432) évasée ou biseautée.

2. Dispositif motorisé selon la revendication précédente, **caractérisé en ce que** l'au moins un élément de liaison mécanique de la barre de compensation au tube d'enroulement comprend une rainure (81) de passage de la toile.

3. Dispositif motorisé selon la revendication précédente, **caractérisé en ce que** le dispositif comprend un capuchon amovible (82) d'obturation au moins partielle de la rainure de passage de la toile.

4. Dispositif motorisé selon l'une des revendications précédentes, **caractérisé en ce que** :
- le tube comprend au moins une première rainure (44, 45) de logement d'extrémité de toile au niveau de l'au moins une première fente, la première rainure présentant une section transversale, notamment une section transversale circulaire ou rectangulaire, dont une dimension (d1, d3) est supérieure à la largeur (L1, L3) de la première fente, la première rainure étant conformée pour recevoir une baguette (xx) liée ou emprisonnée à l'extrémité de la toile, et/ou
- le tube comprend au moins une deuxième fente (413 ; 423 ; 433) formée dans le tube d'enroulement et destinée à recevoir une extrémité de la toile et au moins une deuxième rainure (45) de logement d'extrémité de toile au niveau d'une première fente, la deuxième rainure présentant une section transversale, notamment une section transversale circulaire ou rectangulaire, dont une dimension (d3) est supérieure à la largeur (L3) de la deuxième fente, la première rainure étant conformée pour recevoir une baguette liée à l'extrémité de la toile, les sections transversales des première et deuxième rainures présentant des géométries différentes, notamment des formes et/ou des dimensions différentes, et/ou
- le tube d'enroulement comprend une première partie (41) de tube d'enroulement une deuxième partie (42) de tube d'enroulement et une troisième partie (43) de tube d'enroulement, la première partie (41) de tube d'enroulement, deuxième partie (42) de tube d'enroulement et la troisième partie (43) de tube d'enroulement comprenant chacun une fente (411, 421, 431 ; 413 ; 423 ; 433), chaque fente comprenant au moins à une de ses extrémités une partie (412 ; 422 ; 432) évasée ou biseautée.

5. Dispositif motorisé selon l'une des revendications précédentes, **caractérisé en ce que** le tube comprend un élément de rappel élastique (46 ; 912, 415, 425, 435) rappelant l'au moins une fente dans une position fermée dans laquelle deux bords (414; 424 ; 434) sont en contact l'un contre l'autre.

6. Dispositif motorisé selon la revendication précédente, **caractérisé en ce que** l'élément de rappel élastique comprend au moins une partie (46) élastique de section du tube d'enroulement et/ou un élément d'un manchon de liaison de parties de tube (41, 42, 43), notamment deux rainures (912).

7. Procédé de fabrication d'un dispositif (1) de couverture de fenêtre ou d'écran, notamment d'écran de projection, comprenant une étape de fourniture d'un dispositif motorisé selon l'une des revendications précédentes, une étape de fourniture d'une toile (2) et une étape de mise en place de la toile dans l'au moins une fente.

8. Procédé de fabrication selon la revendication précédente, **caractérisé en ce que** l'étape de mise en place de la toile dans l'au moins une fente est précédée d'une étape de mise en forme d'une extrémité de la toile.

9. Procédé de fabrication selon la revendication précédente, **caractérisé en ce que** l'étape de mise en forme d'une extrémité de la toile comprend une étape de formation d'un repli de l'extrémité de la toile.

10. Procédé de fabrication selon la revendication précédente, **caractérisé en ce que** l'étape de mise en forme d'une extrémité de la toile comprend une étape de maintien du repli de l'extrémité de la toile à l'aide de clips (10).

11. Procédé de fabrication selon la revendication 9 ou 10, **caractérisé en ce que** l'étape de mise en forme d'une extrémité de la toile comprend une étape de mise en place d'une baguette (11) dans le repli.

12. Procédé de fabrication selon l'une des revendications 9 à 11, **caractérisé en ce que** l'étape de mise en place de la toile dans l'au moins une fente comprend un glissement de l'extrémité de la toile selon l'axe longitudinal (X) dans l'au moins une fente.

13. Procédé de fabrication selon l'une des revendications 9 à 12, **caractérisé en ce qu'**il comprend, préalablement à l'étape de mise en place de la toile dans l'au moins une fente, une étape de positionnement du tube d'enroulement de sorte que l'au moins une fente soit placée en vis-à-vis d'une rainure (81) de passage de la toile de l'au moins un élément de liaison mécanique d'une barre de compensation au tube d'enroulement.

14. Procédé de fabrication selon la revendication précédente, **caractérisé en ce qu'**il comprend, après l'étape de mise en place de la toile dans l'au moins une fente, une étape de mise en place d'un capuchon amovible (82) d'obturation au moins partielle de la rainure de passage de la toile.

15. Dispositif (1) de couverture de fenêtre ou d'écran, notamment d'écran de projection, obtenu par la mise en œuvre du procédé selon l'une des revendications 9 à 14.

## Patentansprüche

1. Motorisierte Betätigungsvorrichtung (100) für eine bewegliche Abschirmung mit aufrollbarer Leinwand (2) für eine Fensterabdeckungs- oder Schirmvorrichtung (1), insbesondere Projektionsschirmvorrichtung, wobei die motorisierte Betätigungsvorrichtung dazu bestimmt ist, von der Leinwand gehalten zu werden, und umfasst:
- ein Wickelrohr (4), das um eine erste Achse (X) beweglich ist und auf das sich die Leinwand aufwickeln soll,
- wenigstens einen elektromechanischen Stellantrieb, (5), der wenigstens teilweise in dem Wickelrohr angeordnet ist,
- ein erstes Element zur Befestigung (6) eines ersten Endes der Leinwand am Wickelrohr,
- einen Stab (7) zum Ausgleich des Abwickelmoments, der durch Kontakt mit der Leinwand wirkt, wenigstens ein Element (8) zur mechanischen Verbindung des Ausgleichsstabes mit dem Wickelrohr (4),
**dadurch gekennzeichnet, dass** das erste Befestigungselement (6) wenigstens einen ersten Schlitz (411, 421, 431; 413; 423; 433) umfasst, der in dem Wickelrohr ausgebildet ist und dazu bestimmt ist, ein Ende der Leinwand aufzunehmen, und dadurch, dass der wenigstens eine Schlitz an wenigstens einem seiner Enden einen aufgeweiteten oder abgeschrägten Teil (412; 422; 432) umfasst.

2. Motorisierte Vorrichtung nach dem vorhergehenden Anspruch, **dadurch gekennzeichnet, dass** das wenigstens eine Element zur mechanischen Verbindung des Ausgleichsstabes mit dem Wickelrohr eine Rille (81) für den Durchgang der Leinwand umfasst.

3. Motorisierte Vorrichtung nach dem vorhergehenden Anspruch, **dadurch gekennzeichnet, dass** die Vorrichtung eine lösbare Abdeckkappe (82) zum wenigstens teilweisen Verschluss der Rille für den Durchgang der Leinwand umfasst.

4. Motorisierte Vorrichtung nach einem der vorhergehenden Ansprüche, **dadurch gekennzeichnet, dass**:
- das Rohr wenigstens eine erste Rille (44, 45) zur Aufnahme eines Leinwandendes an dem wenigstens einen ersten Schlitz umfasst, wobei die erste Rille einen Querschnitt aufweist, insbesondere einen kreisförmigen oder rechteckigen Querschnitt, von dem eine Abmessung (d1, d3) größer als die Breite (L1, L3) des ersten Schlitzes ist, wobei die erste Rille dafür ausgebildet ist, eine Leiste (xx) aufzunehmen, die mit dem Ende der Leinwand verbunden oder von diesem eingeschlossen ist, und/oder
- das Rohr wenigstens einen zweiten Schlitz (413; 423; 433), der in dem Wickelrohr ausgebildet ist und dazu bestimmt ist, ein Ende der Leinwand aufzunehmen, und wenigstens eine zweite Rille (45) zur Aufnahme eines Leinwandendes an einem ersten Schlitz umfasst, wobei die zweite Rille einen Querschnitt aufweist, insbesondere einen kreisförmigen oder rechteckigen Querschnitt, von dem eine Abmessung (d3) größer als die Breite (L3) des zweiten Schlitzes ist, wobei die erste Rille dafür ausgebildet ist, eine Leiste aufzunehmen, die mit dem Ende der Leinwand verbunden ist, wobei die Querschnitte der ersten und der zweiten Rille unterschiedliche Geometrien aufweisen, insbesondere unterschiedliche Formen und/oder Abmessungen, und/oder
- das Wickelrohr einen ersten Wickelrohrteil (41), einen zweiten Wickelrohrteil (42) und einen dritten Wickelrohrteil (43) umfasst, wobei der erste Wickelrohrteil (41), der zweite Wickelrohrteil (42) und der dritte Wickelrohrteil (43) jeweils einen Schlitz (411, 421, 431; 413; 423; 433) umfassen, wobei jeder Schlitz an wenigstens einem seiner Enden einen aufgeweiteten oder abgeschrägten Teil (412; 422; 432) umfasst.

5. Motorisierte Vorrichtung nach einem der vorhergehenden Ansprüche, **dadurch gekennzeichnet, dass** das Rohr ein elastisches Rückstellelement (46; 912, 415, 425, 435) umfasst, das den wenigstens einen Schlitz in eine geschlossene Position zurückstellt, in welcher sich zwei Ränder (414; 424; 434) in Kontakt miteinander befinden.

6. Motorisierte Vorrichtung nach dem vorhergehenden Anspruch, **dadurch gekennzeichnet, dass** das elastische Rückstellelement wenigstens einen elastischen Teil (46) des Querschnitts des Wickelrohres und/oder ein Element einer Verbindungsmuffe von Rohrteilen (41, 42, 43), insbesondere zwei Rillen (912), umfasst.

7. Verfahren zur Herstellung einer Fensterabdeckungs- oder Schirmvorrichtung (1), insbesondere Projektionsschirmvorrichtung, welches einen Schritt der Bereitstellung einer motorisierten Vorrichtung nach einem der vorhergehenden Ansprüche, einen Schritt der Bereitstellung einer Leinwand (2) und einen Schritt der Anbringung der Leinwand in dem wenigstens einen Schlitz umfasst.

8. Verfahren zur Herstellung nach dem vorhergehenden Anspruch, **dadurch gekennzeichnet, dass** dem Schritt der Anbringung der Leinwand in dem wenigstens einen Schlitz ein Schritt des Formens eines Endes der Leinwand vorangeht.

9. Verfahren zur Herstellung nach dem vorhergehenden Anspruch, **dadurch gekennzeichnet, dass** der Schritt des Formens eines Endes der Leinwand einen Schritt der Bildung eines Umschlags des Endes der Leinwand umfasst.

10. Verfahren zur Herstellung nach dem vorhergehenden Anspruch, **dadurch gekennzeichnet, dass** der Schritt des Formens eines Endes der Leinwand einen Schritt der Erhaltung des Umschlags des Endes der Leinwand mithilfe von Clips (10) umfasst.

11. Verfahren zur Herstellung nach Anspruch 9 oder 10, **dadurch gekennzeichnet, dass** der Schritt des Formens eines Endes der Leinwand einen Schritt der Anbringung einer Leiste (11) in dem Umschlag umfasst.

12. Verfahren zur Herstellung nach einem der Ansprüche 9 bis 11, **dadurch gekennzeichnet, dass** der Schritt der Anbringung der Leinwand in dem wenigstens einen Schlitz ein Schieben des Endes der Leinwand entlang der Längsachse (X) in den wenigstens einen Schlitz umfasst.

13. Verfahren zur Herstellung nach einem der Ansprüche 9 bis 12, **dadurch gekennzeichnet, dass** es vor dem Schritt der Anbringung der Leinwand in dem wenigstens einen Schlitz einen Schritt der Positionierung des Wickelrohres umfasst, und zwar derart, dass der wenigstens eine Schlitz gegenüber einer Rille (81) für den Durchgang der Leinwand des wenigstens einen Elements zur mechanischen Verbindung eines Ausgleichsstabes mit dem Wickelrohr angeordnet ist.

14. Verfahren zur Herstellung nach dem vorhergehenden Anspruch, **dadurch gekennzeichnet, dass** es nach dem Schritt der Anbringung der Leinwand in dem wenigstens einen Schlitz einen Schritt der Anbringung einer lösbaren Abdeckkappe (82) zum wenigstens teilweisen Verschluss der Rille für den Durchgang der Leinwand umfasst.

15. Fensterabdeckungs- oder Schirmvorrichtung (1), insbesondere Projektionsschirmvorrichtung, welche durch die Durchführung des Verfahrens nach einem der Ansprüche 9 bis 14 erhalten wird.

## Claims

1. Motorized operating device (100) for operating a movable screen including (2) a roll-up fabric of a window covering or screen device (1), in particular a projection screen device, the motorized operating device being intended to be suspended by the fabric and comprising:
- a winding tube (4) mobile about a first axis (X) and onto which the fabric is intended to be wound,
- at least one electromechanical actuator (5) disposed at least partly in the winding tube,
- a first means for fixing (6) a first end of the fabric to the winding tube,
- a bar (7) for compensating the unwinding torque acting by contact with the fabric,
- at least one element (8) for mechanically connecting the compensation bar to the winding tube (4),
**characterized in that** the first fixing element (6) comprises at least one first slot (411, 421, 431; 413; 423; 433) formed in the winding tube and intended to receive one end of the fabric and **in that** the at least one slot comprises at at least one of its ends a tapered or beveled part (412; 422; 432).

2. The motorized device as claimed in the preceding claim, **characterized in that** the at least one element for mechanically connecting the compensation bar to the winding tube comprises a fabric passage groove (81).

3. The motorized device as claimed in the preceding claim, **characterized in that** the device comprises a removable cap (82) for at least partly blocking the fabric passage groove.

4. The motorized device as claimed in any one of the preceding claims, **characterized in that**:
- the tube comprises at least one first fabric end housing groove (44, 45) at the level of the at least one first slot, the first groove having a cross section, in particular a circular or rectangular cross section, of which one dimension (d1, d3) is greater than the width (L1, L3) of the first slot, the first groove being conformed to receive a rod (xx) connected to or trapped in the end of the fabric, and/or
- the tube comprises at least one second slot (413; 423; 433) formed in the winding tube and intended to receive one end of the fabric and at least one second fabric end housing groove (45) at the level of a first slot, the second groove having a cross section, in particular a circular or rectangular cross section, of which one dimension (d3) is greater than the width (L3) of the second slot, the first groove being conformed to receive a rod connected to the end of the fabric, the cross sections of the first and second grooves having different geometries, in particular different shapes and/or dimensions, and/or
- the winding tube comprises a first winding tube part (41), a second winding tube part (42) and a third winding tube part (43), the first winding tube part (41), the second winding tube part (42) and the third winding tube part (43) each comprising a slot (411, 421, 431; 413; 423; 433), each slot comprising at at least one of its ends a tapered or beveled part (412; 422; 432).

5. The motorized device as claimed in any one of the preceding claims, **characterized in that** the tube comprises an elastic return element (46; 912, 415, 425, 435) urging the at least one slot into a closed position in which two edges (414; 424; 434) are in contact one against the other.

6. The motorized device as claimed in the preceding claim, **characterized in that** the elastic return element comprises at least one elastic section part (46) of the winding tube and/or one element of a sleeve connecting tube parts (41, 42, 43), in particular two grooves (912).

7. A method of manufacturing a window covering or screen, in particular projection screen, device (1), comprising a step of procuring a motorized device as claimed in any one of the preceding claims, a step of procuring a fabric (2) and a step of placing the fabric in the at least one slot.

8. The method of manufacture as claimed in the preceding claim, **characterized in that** the step of placing the fabric in the at least one slot is preceded by a step of shaping one end of the fabric.

9. The method of manufacture as claimed in the preceding claim, **characterized in that** the step of shaping one end of the fabric comprises a step of forming a hem fold at the end of the fabric.

10. The method of manufacture as claimed in the preceding claim, **characterized in that** the step of shaping one end of the fabric comprises a step of securing the hem fold at the end of the fabric by means of clips (10).

11. The method of manufacture as claimed in claim 9 or 10, **characterized in that** the step of shaping one end of the fabric comprises a step of placing a rod (11) in the hem fold.

12. The method of manufacture as claimed in any one of claims 9 to 11, **characterized in that** the step of placing the fabric in the at least one slot comprises sliding the end of the fabric along the longitudinal axis (X) in the at least one slot.

13. The method of manufacture as claimed in any one of claims 9 to 12, **characterized in that** it comprises, before the step of placing the fabric in the at least one slot, a step of positioning the winding tube so that the at least one slot is placed face-to-face with a fabric passage groove (81) of the at least one element for mechanically connecting a compensation bar to the winding tube.

14. The method of manufacture as claimed in the preceding claim, **characterized in that** it comprises, after the step of placing the fabric in the at least one slot, a step of placing a removable cap (82) for at least partly blocking the fabric passage groove.

15. A window covering or screen, in particular projection screen, device (1) obtained by execution of the method as claimed in any one of claims 9 to 14.
